# EUROPÄISCHE PATENTSCHRIFT

(11) **EP 1 249 312 B1**
(45) Veröffentlichungstag und Bekanntmachung des Hinweises auf die Patenterteilung: **29.11.2006**
(21) Anmeldenummer: 02007706.1
(22) Anmeldetag: 05.04.2002
(51) Int. Cl.: B25B 5/08, B25B 5/12

(54) **Schubstangenspanner**
Push rod clamping device
Dispositif de serrage à bielle

(30) Priorität: 13.04.2001 DE 10118319
(43) Veröffentlichungstag der Anmeldung: 16.10.2002
(73) Patentinhaber: DE-STA-CO Europe GmbH, 61440 Oberursel (DE)
(72) Erfinder: Ulle, Detlev, 61203 Reichelsheim (DE)
(74) Vertreter: Wolf, Günter

(56) Entgegenhaltungen:
- EP-A- 0 615 817
- DE-U- 29 701 730
- GB-A- 2 236 503
- US-A- 4 257 583
- US-A- 5 149 070

## Beschreibung

Die Erfindung betrifft einen Schubstangenspanner gemäß dem Oberbegriff des Anspruchs 1, der aus dem Dokument US A 257 583 A bekannt ist.

Schubstangenspanner mit einer linear beweglichen Schubstange sind in vielen verschiedenen Ausführungsformen bekannt. Verwendet werden diese Schubstangenspanner beispielsweise in der Automobilindustrie beim Verschweißen von Blechen, und zwar derart, dass der Spanner zwei Bleche aufeinander drückt und mit einer Schweißzange eine Punktschweißung durchgeführt wird.

Bei einer weiteren bekannten Ausführungsform eines solchen Schubstangenspanners sind die Bauteile der Kniehebelgelenkanordnung an einer aus abgewinkelten Blechen bestehenden Konstruktion angeordnet bzw. angelenkt, d.h. das Antriebselement, das Stellglied, die Zwischenglieder und die Schubstange sind von außen ohne weiters zugänglich. Zur Zwangsführung des zwischen den beiden Zwischengliedern angeordneten Gelenks ist das stellgliedseitige Zwischenglied mit einem winklig abgeknickten Fortsatz versehen, der über ein weiteres Gelenk an der erwähnten Rahmenkonstruktion aus Blech angelenkt ist. Hierdurch wird erreicht, dass die Kinematik keine unzulässigen Freiheitsgrade aufweist, d.h. die möglichen Bewegungen der einzelnen Elemente sind durch die beschriebene Anbindung eindeutig festgelegt.

Problematisch an diesem bekannten Schubstangenspanner ist neben der aufgrund der zwingend offenen Bauart gegebenen Anfälligkeit für Verschmutzung insbesondere, dass das Antriebselement in einem gewissen Umfang bezüglich der Rahmenkonstuktion verschwenkbar gelagert sein muss, da die Anbindung des stellgliedseitigen Zwischenglieds an der Rahmenkonstruktion eine Bewegung des Stellgliedes auf einer Kreisbahn bedingt. Die Befestigung des Antriebselements ist somit also recht aufwendig und darüber hinaus mit dem Nachteil verbunden, dass beispielsweise die pneumatischen Steuerleitungen flexibel zum Antriebselement verlegt sein müssen, da sich dieses mit jedem Arbeitshub hin und her bewegt. Ein wirksamer Schutz vor Schmutz kann ferner nur dann gewährleistet werden, wenn man den gesamtem Spanner einschließlich Antriebselement mit einem entsprechend großen Gehäuse umschließt.

Der Erfindung liegt die Aufgabe zugrunde, bei einem Schubstangenspanner der eingangs genannten Art dafür zu sorgen, dass das Antriebselement fest an der Rahmen- bzw. Gehäusekonstruktion befestigbar ist, damit dieser einerseits ohne weiteres mit einem einzigen kompakten Gehäuse gegen Verschnutzung schützbar ist und andererseits die Anschlüsse des Antriebselements keiner verschleißenden Schwenkbewegung ausgesetzt sind.

Diese Aufgabe wird durch die im Anspruch 1 aufgeführten Merkmale gelöst.

Dieser Schubstangenspanner ist beispielsweise in der Automobilindustrie von besonderer Bedeutung, als die immer weitere Zunahme der Laserschweißtechnik aufgrund der platzbeanspruchenden Laseroptiken bedingt, dass die Schubstangenspanner umso besser einsetzbar sind, je kleiner ihr Gehäuse ausgebildet ist.

Hinsichtlich der Kulissenbahnführung ist vorgesehen, dass die Kulisse einen sich in Bewegungsrichtung des Stellgliedes erstreckenden Abschnitt aufweist, in dem ein am Stellglied angeordnetes Führungselement, vorzugsweise ebenfalls eine drehbare Führungsrolle, linear geführt ist. Im Anschluss an den linear verlaufenden Abschnitt ist für die am Gelenk angeordnete Führungsrolle eine bis in den Bewegungsbereich der Schubstange reichende Krümmung vorgesehen, die bewirkt, dass sich das Gelenk in Spannstellung senkrecht unterhalb der Schubstange befindet, die Schubstange mithin gegenüber äußeren Kräften verriegelt ist.

Zur Verbesserung der Bewegung des Führungselements innerhalb der Kulisse ist vorteilhaft vorgesehen, dass das Führungselement kulissenangepaßt als drehbar am Gelenk gelagerte Führungsrolle ausgebildet ist.

Weitere vorteilhafte Weiterbildungen der Erfindung ergeben sich aus den übrigen abhängigen Ansprüchen.

Der erfindungsgemäße Schubstangenspanner sowie seine vorteilhaften Weiterbildungen nach den Unteransprüchen werden nachfolgend anhand der zeichnerischen Darstellung eines Ausführungsbeispiels ausführlich erläutert.

Es zeigt
- Fig. 1: in perspektivischer Ansicht und teilweise geschnitten eine Ausführungsform des Schubstangenspanner in geöffneter Stellung;
- Fig. 2: in perspektivischer Ansicht und teilweise geschnitten den Schubstangenspanner nach Fig. 1 in einer Zwischenstellung;
- Fig. 3: in perspektivischer Ansicht und teilweise geschnitten den Schubstangenspanner nach Fig. 1 in Spannstellung;
- Fig. 4: in Seitenansicht die Mechanik des Schubstangenspanners nach Fig. 1 in geöffneter Stellung;
- Fig. 5: in Seitenansicht die Mechanik des Schubstangenspanners nach Fig. 1 in Spannstellung und
- Fig. 6: in perspektivischer Ansicht einen Schubstangenspanner mit Druckstück im Einsatz beim Schweißen einer Automobildachnaht.

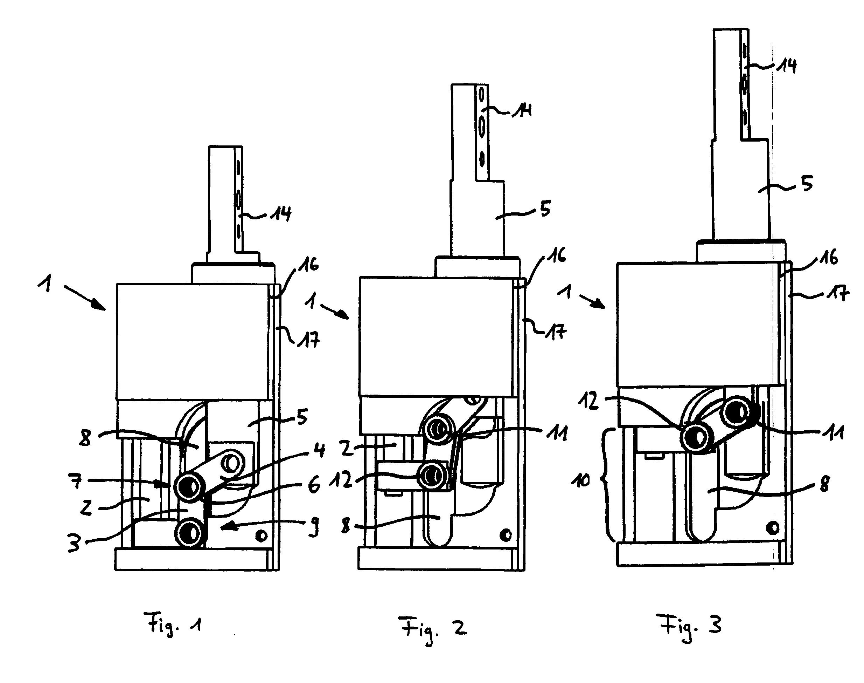

Der in den Fig. 1 bis 3 dargestellte Schubstangenspanner umfasst ein Antriebselement 1 mit einem linear beweglichen Stellglied 2, das über ein erstes, stellgliedseitiges 3 und ein zweites, schubstangenseitiges Zwischenglied 4 mit einer linear geführten Schubstange 5 verbunden ist, wobei einerseits die Zwischenglieder 3, 4 mittels eines gemeinsamen Gelenkes 6 miteinander und andererseits das stellgliedseitige Zwischenglied 3 mit dem Stellglied 2 und das schubstangenseitige Zwischenglied 4 mit der Schubstange 5 gelenkig verbunden sind, wobei das gemeinsame Gelenk 6 der Zwischenglieder 3, 4 zur Festlegung einer definierten Bewegung und auch zur Arretierung der Schubstange 5 in einer Übertotpunktstellung zwangsgeführt ist.

Wesentlich für diesen Schubstangenspanner ist nun, dass das gemeinsame Gelenk 6 mindestens ein Führungselement 7 aufweist, das in einer zum Antriebselement 1 ortsfesten Kulisse 8 geführt ist.

Dabei ist vorteilhaft vorgesehen, dass das Führungselement 7 kulissenangepaßt als drehbar am Gelenk 6 gelagerte Führungsrolle 11 ausgebildet und die Kulisse 8 einen sich in Bewegungsrichtung des Stellgliedes 2 erstreckenden Abschnitt 10 aufweist, in dem ein am Stellglied 2 angeordnetes Führungselement 9 linear geführt ist, das ebenfalls kulissenangepaßt als drehbar am Stellglied 2 gelagerte Führungsrolle 12 ausgebildet ist.

Dabei ist das Stellglied 2 des Antriebselements 1 bei der dargestellten Ausführungsform zwischengliedseitig rechtwinklig abgewinkelt ausgebildet, um das Antriebselement 1 parallel neben der Schubstange 5 anordnen zu können, so dass sich der Schubstangenspanner in Längsrichtung vergleichsweise kurz erstreckt. Möglich (aber nicht dargestellt) ist auch eine schmalere, dafür aber längere Ausführungsform, bei sich der das Antriebselement 1 in Verlängerungsrichtung des linearen Abschnitts 10 der Kulisse 8 erstreckt.

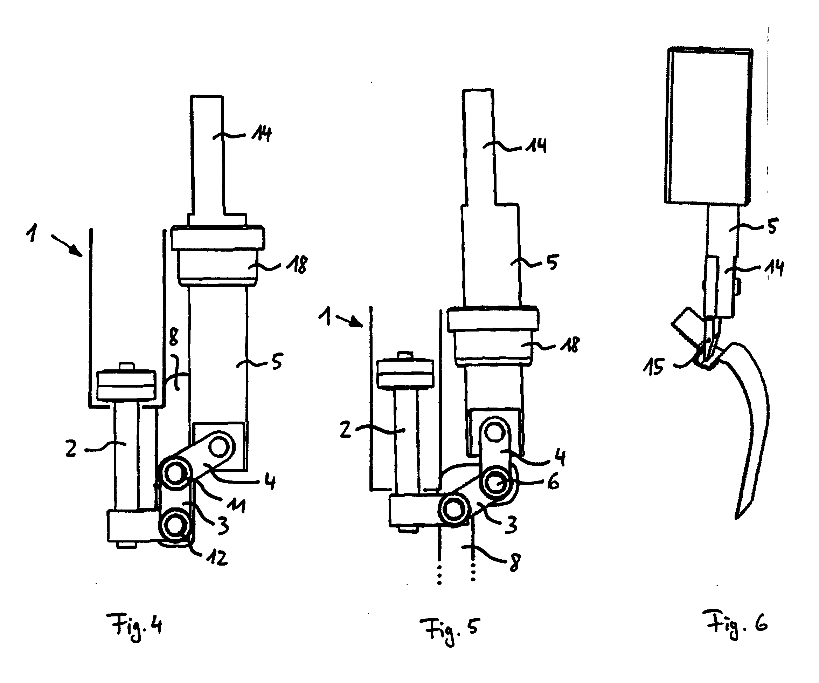

Ferner besteht eine vorteilhafte Weiterbildung darin (wie in den Fig. 1 bis 3 und 6 dargestellt), dass das Stellglied 2, die Zwischenglieder 3, 4 und die Schubstange 5 zum Schutz gegen Schmutz in einem nach aussen abgeschlossenen Gehäuse 13 angeordnet sind, wobei die Kulisse 8 als integraler Bestandteil des Gehäuses 13 ausgebildet ist. Das Antriebselement 1 ist darüber hinaus ebenfalls innerhalb des Gehäuses 13 angeordnet. Als Antriebselement 1 kommt dabei insbesondere ein Pneumatikzylinder in Betracht (siehe Fig. 4 und 5), ebenso denkbar ist aber auch ein elektromotorischer Antrieb oder dgl.

Zur möglichst einfachen Integration der Kulisse 8 ist vorteilhaft vorgesehen, dass das Gehäuse 13 im wesentlichen aus zwei gegossenen Halbschalen 16, 17 mit an der jeweiligen Innenseite eingefräster Kulisse 8 besteht.

Alternativ (nicht dargestellt) kann die Kulisse 8 aber auch als separates, gehärtetes Teil in das Gehäuse 13 eingesetzt sein, nämlich dann, wenn die Belastung an der Schubstange 5 erwartbar so groß ist, dass beispielsweise bei einem aus Aluminium gebildeten Gehäuse 13 mit einer Deformierung der Kulisse 8 gerechnet werden muss.

Im Zusammenhang mit großen Belastungen, aber auch zur Vergleichmäßigung der Krafteinleitung ins Gehäuse 13 ist ferner vorteilhaft vorgesehen, dass beidseitig des Gelenkes 6 Führungselemente 7 und dazugehörige Kulissen 8 angeordnet sind. Hierdurch ergibt sich mithin eine beidseitige und damit besonders gleichmäßige Führung der Zwischenglieder 3 und 4.

Die Fig. 4 und 5 zeigen ergänzend zu den Fig. 1 bis 3 die Mechanik des Schubstangenspanners aus dem Gehäuse herausgelöst, wobei zur Funktionsverdeutlichung das Antriebselement 1 (hier ein Pneumatikzylinder), die Kulisse 8 und die Führungsbuchse 18 der Schubstange 5 schematisch angedeutet sind.

Schließlich ist mit Verweis auf Fig. 6, in der ein Anwendungsfall dargestellt ist, noch vorteilhaft vorgesehen, dass an der Schubstange 5 eine genormte Schnittstelle 14 zur Aufnahme unterschiedlicher Druckstücke 15 angeordnet ist.

### Bezugszeichenliste

- 1: Antriebselement
- 2: Stellglied
- 3: stellgliedseitiges Zwischenglied
- 4: schubstangenseitiges Zwischenglied
- 5: Schubstange
- 6: Gelenk
- 7: Führungselement
- 8: Kulisse
- 9: Führungselement
- 10: Abschnitt
- 11: Führungsrolle
- 12: Führungsrolle
- 13: Gehäuse
- 14: Schnittstelle
- 15: Druckstück
- 16: Halbschale
- 17: Halbschale
- 18: Führungsbuchse

## Patentansprüche

1. Schubstangenspanner, umfassend ein Antriebselement (1) mit einem linear beweglichen Stellglied (2), das über ein erstes, stellgliedseitiges (3) und ein zweites, schubstangenseitiges Zwischenglied (4) mit einer linear geführten Schubstange (5) verbunden ist, wobei einerseits die Zwischenglieder (3, 4) mittels eines gemeinsamen Gelenkes (6) miteinander und andererseits das stellgliedseitige Zwischenglied (3) mit dem Stellglied (2) und das schubstangenseitige Zwischenglied (4) mit der Schubstange (5) gelenkig verbunden sind, wobei das gemeinsame Gelenk (6) der Zwischenglieder (3, 4) zur Festlegung einer definierten Bewegung und auch zur Arretierung der Schubstange (5) in einer Übertotpunktstellung zwangsgeführt ist, wobei das gemeinsame Gelenk (6) mindestens ein Führungselement (7) aufweist, das in einer zum Antriebselement (1) ortsfesten Kulisse (8) geführt ist, wobei die Kulisse (8) einen sich in Bewegungsrichtung des Stellgliedes (2) erstreckenden, linear verlaufenden Abschnitt aufweist,
**dadurch gekennzeichnet,**
**dass** im Anschluss an den linear verlaufenden Abschnitt für das am Gelenk (6) angeordnete Führungselement (7) eine bis in den Bewegungsbereich der Schubstange (5) reichende Krümmung vorgesehen ist.

2. Schubstangenspanner nach Anspruch 1,
**dadurch gekennzeichnet,**
**dass** das Führungselement (7) kulissenangepaßt als drehbar am Gelenk (6) gelagerte Führungsrolle (11) ausgebildet ist.

3. Schubstangenspanner nach Anspruch 1 oder 2,
**dadurch gekennzeichnet,**
**dass** (2) in dem linear verlaufenden Abschnitt (10) ein am Stellglied (2) angeordnetes Führungselement (9) linear geführt ist.

4. Schubstangenspanner nach Anspruch 3,
**dadurch gekennzeichnet,**
**dass** das Führungselement (9) kulissenangepaßt als drehbar am Stellglied (2) gelagerte Führungsrolle (12) ausgebildet ist.

5. Schubstangenspanner nach einem der Ansprüche 1 bis 4,
**dadurch gekennzeichnet,**
**dass** das Stellglied (2), die Zwischenglieder (3, 4) und die Schubstange (5) in einem nach aussen abgeschlossenen Gehäuse (13) angeordnet sind.

6. Schubstangenspanner nach Anspruch 5,
**dadurch gekennzeichnet,**
**dass** die Kulisse (8) integraler Bestandteil des Gehäuses (13) ist.

7. Schubstangenspanner nach Anspruch 5 oder 6,
**dadurch gekennzeichnet,**
**dass** das Gehäuse (13) im wesentlichen aus zwei gegossenen Halbschalen (16, 17) mit eingefräster Kulisse (8) besteht.

8. Schubstangenspanner nach einem der Ansprüche 5 bis 7,
**dadurch gekennzeichnet,**
**dass** das Antriebselement (1) innerhalb des Gehäuses (13) angeordnet ist.

9. Schubstangenspanner nach Anspruch 5 oder 8,
**dadurch gekennzeichnet,**
**dass** die Kulisse (8) als separates, gehärtetes Teil in das Gehäuse (13) eingesetzt ist.

10. Schubstangenspanner nach einem der Ansprüche 1 bis 9,
**dadurch gekennzeichnet,**
**dass** beidseitig des Gelenkes (6) Führungselemente (7) und dazugehörige Kulissen (8) angeordnet sind.

11. Schubstangenspanner nach einem der Ansprüche 1 bis 10,
**dadurch gekennzeichnet,**
**dass** das Stellglied (2) des Antriebselements (1) zwischengliedseitig rechtwinklig abgewinkelt ausgebildet ist.

12. Schubstangenspanner nach einem der Ansprüche 1 bis 11,
**dadurch gekennzeichnet,**
**dass** an der Schubstange (5) eine genormte Schnittstelle (14) zur Aufnahme unterschiedlicher Druckstücke (15) vorgesehen ist.

## Claims

1. A push rod clamping fixture comprising a drive unit (1) with a linearly guided actuator (2) that is connected to a linearly guided push rod (5) by means of a first intermediate element (3) on the actuator side and a second intermediate element (4) on the push rod side, wherein the intermediate elements (3, 4) are connected to one another by means of a common link (6), wherein the intermediate element (3) on the actuator side is connected in an articulated fashion to the actuator (2) and the intermediate element (4) on the push rod side is connected in an articulated fashion to the push rod (5), wherein the common link (6) of the intermediate elements (3, 4) is guided in a restricted fashion in order to achieve a defined motion and to lock the push rod (5) in a top dead center position, wherein the common link (6) features at least one guide element (7) that is guided in a motion link (8) arranged stationarily referred to the drive unit (1), and wherein the motion link (8) features a linearly extending section that extends in the moving direction of the actuator (2),
**characterized in**
**that** a curved section extending as far as the range of motion of the push rod (5) is provided after the linearly extending section for the guide roll (7) arranged on the link (6).

2. The push rod clamping fixture according to Claim 1,
**characterized in**
**that** the guide element (7) is adapted to the motion link and realized in the form of a guide roll (11) rotatably supported on the link (6).

3. The push rod clamping fixture according to Claim 1 or 2,
**characterized in**
**that** a guide element (9) arranged on the actuator (2) is linearly guided in the linearly extending section (10).

4. The push rod clamping fixture according to Claim 3,
**characterized in**
**that** the guide element (9) is adapted to the motion link and realized in the form of a guide roll (12) rotatably supported on the actuator (2).

5. The push rod clamping fixture according to one of Claims 1 to 4,
**characterized in**
**that** the actuator (2), the intermediate elements (3, 4) and the push rod (5) are arranged in a housing (13) that is closed toward the outside.

6. The push rod clamping fixture according to Claim 5,
**characterized in**
**that** the motion link (8) forms an integral component of the housing (13).

7. The push rod clamping fixture according to Claim 5 or 6,
**characterized in**
**that** the housing (13) essentially consists of two cast shells (16, 17) with the motion link (8) machined therein.

8. The push rod clamping fixture according to one of Claims 5 to 7,
**characterized in**
**that** the drive unit (1) is arranged within the housing (13).

9. The push rod clamping fixture according to Claim 5 or 8,
**characterized in**
**that** the motion link (8) is inserted into the housing (13) in the form of a separate hardened part.

10. The push rod clamping fixture according to one of Claims 1 to 9,
**characterized in**
**that** guide elements (7) and corresponding motion links (8) are arranged to both sides of the link (6).

11. The push rod clamping fixture according to one of Claims 1 to 10,
**characterized in**
**that** the actuator (2) of the drive unit (1) is realized in a perpendicularly bent fashion on the side of the intermediate element.

12. The push rod clamping fixture according to one of Claims 1 to 11,
**characterized in**
**that** a standardized interface (14) for receiving different thrust members (15) is provided on the push rod (5).

## Revendications

1. Dispositif de serrage à barre de poussée, comprenant un élément de propulsion (1) équipé d'un élément de réglage mobile linéairement (2) qui est relié par un premier élément intermédiaire placé côté élément de réglage (3) et un deuxième élément intermédiaire placé côté barre de poussée (4) à une barre de poussée guidée linéairement (5), tandis que, d'une part, les éléments intermédiaires (3, 4) sont reliés entre eux au moyen d'une articulation commune (6) et que, d'autre part, l'élément intermédiaire placé côté élément de réglage (3 est relié de manière articulée à l'élément de réglage (2) et l'élément intermédiaire placé côté barre de poussée (4) est relié de manière articulée à la barre de poussée (5), l'articulation commune (6) des éléments intermédiaires (3, 4), pour établir un mouvement défini et aussi pour bloquer la barre de poussée (5) dans une position audelà du point mort, étant guidée de manière forcée, cette articulation commune (6) présentant au moins un élément de guidage (7) qui est guidé dans une coulisse (8) fixe par rapport à l'élément de propulsion (1), la coulisse (8) présentant une section s'étendant dans le sens de mouvement de l'élément de réglage (2) et orientée linéairement,
**caractérisé en ce que**,
à la suite de la section s'étendant linéairement pour l'élément de guidage (7) disposé à l'articulation (6), il est prévu une courbure allant jusqu'à la zone de mouvement de la barre de poussée (5).

2. Dispositif de serrage à barre de poussée selon la revendication 1,
**caractérisé en ce que**
l'élément de guidage (7) est réalisé de manière adaptée à la coulisse sous forme de rouleau de guidage (11) s'appuyant en rotation à l'articulation (6).

3. Dispositif de serrage à barre de poussée selon la revendication 1 ou 2,
**caractérisé en ce que**,
dans la section s'étendant linéairement (10), un élément de guidage (9) disposé sur l'élément de réglage (2) est guidé linéairement.

4. Dispositif de serrage à barre de poussée selon la revendication 3,
**caractérisé en ce que**
l'élément de guidage (9) est réalisé de manière adaptée à la coulisse sous forme de rouleau de guidage (11) s'appuyant sur l'élément de réglage (2).

5. Dispositif de serrage à barre de poussée selon une des revendications 1 à 4,
**caractérisé en ce que**
l'élément de réglage (2), les éléments intermédiaires (3, 4) et la barre de poussée (5) sont disposés dans une enceinte (13) fermée sur l'extérieur.

6. Dispositif de serrage à barre de poussée selon la revendication 5,
**caractérisé en ce que**
la coulisse (8) fait partie intégrante de l'enceinte (13).

7. Dispositif de serrage à barre de poussée selon la revendication 5 ou 6,
**caractérisé en ce que**
l'enceinte (13) est composée sensiblement de deux demi-coques coulées (16, 17) où est fraisée une coulisse (8).

8. Dispositif de serrage à barre de poussée selon une des revendications 5 à 7,
**caractérisé en ce que**
l'élément de propulsion (1) est disposé à l'intérieur de l'enceinte (13).

9. Dispositif de serrage à barre de poussée selon la revendication 5 ou 8,
**caractérisé en ce que**
la coulisse (8) est insérée sous forme de pièce trempée séparée dans l'enceinte (13).

10. Dispositif de serrage à barre de poussée selon une des revendications 1 à 9,
**caractérisé en ce que**,
des deux côtés de l'articulation (6), sont disposés des éléments de guidage (7) et des coulisses (8) en faisant partie.

11. Dispositif de serrage à barre de poussée selon une des revendications 1 à 10,
**caractérisé en ce que**
l'élément de réglage (2) de l'élément de propulsion (1) est réalisé avec un coùdage orthogonal côté élément intermédiaire.

12. Dispositif de serrage à barre de poussée selon une des revendications 1 à 11,
**caractérisé en ce que**,
il est prévu sur la barre de poussée (5) une interface normalisée (14) destinée à recevoir différentes pièces de compression (15).
